# EUROPÄISCHE PATENTSCHRIFT

(11) **EP 2 572 953 B1**
(45) Veröffentlichungstag und Bekanntmachung des Hinweises auf die Patenterteilung: **14.10.2015**
(21) Anmeldenummer: 12005951.4
(22) Anmeldetag: 18.08.2012
(51) Int. Cl.: B60W 30/08, B60W 50/02, B60W 50/14

(54) **Verfahren zum Betrieb eines Sicherheitssystems eines Kraftfahrzeugs und Kraftfahrzeug**
Method for operating a safety system of a motor vehicle and motor vehicle
Procédé pour opérer un système de sécurité d'un véhicule automobile et véhicule automobile

(30) Priorität: 24.09.2011 DE 102011115223
(43) Veröffentlichungstag der Anmeldung: 27.03.2013
(73) Patentinhaber: Audi AG, 85045 Ingolstadt (DE)
(72) Erfinder: Brenneis, Oliver, 85748 Garching (DE); Freyer, Jörn, 81827 München (DE); Hantschke, Christopher, 85080 Gaimersheim (DE)
(74) Vertreter: Thielmann, Frank

(56) Entgegenhaltungen:
- WO-A1-2005/047066
- DE-A1-102008 008 555
- DE-A1-102009 002 375
- DE-A1-102009 028 880
- DE-A1-102010 048 351
- FR-A1- 2 909 958
- US-A1- 2006 219 458
- US-B1- 6 480 144

## Beschreibung

Die Erfindung betrifft ein Verfahren nach dem Oberbegriff des Anspruchs 1 zum Betrieb eines Sicherheitssystems eines Kraftfahrzeugs, insbesondere eines Systems zur Kollisionsfolgenminderung bei einer unvermeidlichen Kollision, sowie ein Kraftfahrzeug mit einem solchen Sicherheitssystem.

Im Stand der Technik sind bereits aktive Sicherheitssysteme bekannt, die insbesondere zur Kollisionsvermeidung und/oder Kollisionsfolgenminderung ausgebildet sind. Solche Systeme überprüfen, meist anhand einer Kollisionswahrscheinlichkeit, das Risiko einer Kollision und können durch verschiedene Maßnahmen versuchen, eine Kollision zu vermeiden und/oder zumindest die entstehenden Schäden bei einer Kollision gering zu halten. Die Maßnahmen können dabei aktive Fahreingriffe umfassen, jedoch auch die Ausgabe von Warnungen und/oder Anweisungen sowie die Ansteuerung weiterer Fahrzeugsysteme. Beispielsweise ist es bekannt, im Vorfeld einer möglichen oder unvermeidlichen Kollision die Betriebsparameter von Fahrzeugsystemen im Hinblick auf die spezielle Situation anzupassen, beispielsweise im Sinne einer Präkonditionierung, Reduzierung von Totzeiten und dergleichen.

Bei einer unvermeidlichen Kollision, wenn also selbst durch Fahreingriffe die dynamischen Möglichkeiten des Kraftfahrzeugs nicht mehr ausreichen, eine Kollision mit einem Kollisionspartner zu vermeiden, kann es nach der Erstkollision zu schwerwiegenden Folgekollisionen kommen. Um diesen entgegenzuwirken, sind im aktuellen Stand der Technik meist nur Eingriffe des Fahrers selbst denkbar, was jedoch voraussetzt, dass dies dem Fahrer körperlich noch möglich ist und innerhalb seines fahrerischen Könnens liegt. Die Erfahrung zeigt jedoch, dass Fahrer in solchen Extremsituationen häufig nicht dazu in der Lage sind, Folgekollisionen durch eigene Maßnahmen zu vermeiden oder zumindest die entstehenden Schäden zu mindern.

Daher wurde vorgeschlagen, als aktives Sicherheitssystem eine sogenannte Multikollisionsbremse zu verwenden. In diesen speziellen Sicherheitssystemen ist vorgesehen, dass nach einer Erstkollision die Bremsen des Kraftfahrzeugs geschlossen werden, um ein unkontrolliertes Weiterbewegen des Kraftfahrzeugs zu vermeiden und die Bewegungsenergie des Kraftfahrzeugs schnellstmöglich zu reduzieren. Hierbei wird jedoch lediglich auf die Längsführung des Kraftfahrzeugs Einfluss genommen. Das Problem bei dieser Vorgehensweise ist, dass sie gänzlich ungezielt stattfindet, so dass keinerlei Einfluss darauf gegeben ist, ob es nicht gerade durch das Anziehen der Bremsen zu Folgekollisionen kommt. Ein anderes Problem ist die Halteposition, welche durchaus auch kritisch sein kann, insbesondere im Hinblick auf ein "Schlittern" auf die Gegenfahrbahn und dergleichen.

WO 2005/047066 A1 offenbart ein Verfahren nach dem Oberbegriff des Anspruchs 1. Dabei wird das Fahrzeugumfeld erst nach Erkennung einer Erstkollision erfasst. Befinden sich Objekte in der Fahrzeugtrajektorie wird eine Trajektorie zum Ausweichen ermittelt, auf der das Fahrzeug autonom sicher in den Stillstand gebremst werden kann. Das Ziel ist das unkontrollierte Fahrzeug möglichst schnell in den Stillstand zu verzögern, ohne weitere Kollisionen zu verursachen.

Der Erfindung liegt daher die Aufgabe zugrunde, ein Verfahren zum Betrieb eines Sicherheitssystems anzugeben, das nach einer Erstkollision die Sicherheit im Hinblick auf Folgekollisionen erhöht.

Das erfindungsgemäße Verfahren sieht vor, dass bei einer unvermeidlichen Kollision durch das Sicherheitssystem eine einer im Hinblick auf Zweitkollisionen sicheren Zielstellung zugeordnete, nach der Kollision zu realisierende Zieltrajektorie des Kraftfahrzeugs ermittelt wird und wenigstens ein autonomer und/oder unterstützender Fahreingriff in Form wenigstens eines Längsführungseingriffs und/oder Querführungseingriffs zur Realisierung der Zieltrajektorie vorgenommen wird.

Erfindungsgemäß wird also vorgeschlagen, eine intelligente Steuerungslogik einzusetzen, welche eine sichere Zielstellung, insbesondere umfassend eine Zielposition und/oder eine Zielorientierung des Kraftfahrzeugs, und entsprechend eine Zieltrajektorie, um diese Zielstellung zu erreichen, bestimmen kann. Grundlage einer solchen Ermittlung sind vorzugsweise Umfelddaten, die insbesondere von Umfeldsensoren des Kraftfahrzeugs ermittelt werden können, und Egodaten, die den aktuellen Fahrzustand des Kraftfahrzeugs beschreiben. Es wird also eine optimale Haltestellung, insbesondere Halteposition und/oder Halteorientierung, hinsichtlich der Vermeidung bzw. Verminderung der Folgen von Folgekollisionen mit Hindernissen in der Umgebung (beispielsweise Baum, Leitplanke) und Folgeunfällen mit weiteren Fahrzeugen (beispielsweise Fahrzeugen auf dem Standstreifen und/oder im Gegenverkehr) ermittelt.

Hat nun die Erstkollision stattgefunden, ist das erfindungsgemäße Sicherheitssystem ausgebildet, wenigstens einen Fahreingriff zur Vermeidung von Folgekollisionen durchzuführen, der sich entsprechend an der Zielstellung und der Zieltrajektorie orientiert. Dabei sei an dieser Stelle darauf hingewiesen, dass bei einer nur eine Zielorientierung umfassenden Zielstellung beispielsweise vermieden werden kann, dass das Fahrzeug quer steht und/oder erreicht werden kann, dass das Kraftfahrzeug in der Richtung einer möglichen Zweitkollisionsgefahr mehr Deformationsraum bietet und/oder in dieser Richtung einseitig höher gestellt ist und dergleichen, was auch durch Fahreingriffe, insbesondere intelligentes Bremsen und/oder Lenken, erreicht werden kann.

Somit wird insgesamt ein System zur Verfügung gestellt, welches auf intelligente Weise auch nach einer Erstkollision in der Lage ist, die Sicherheit im Hinblick auf mögliche Folgeunfälle zu erhöhen, indem auf ein sicheres Abstellen des Kraftfahrzeugs hingewirkt wird.

Dabei werden bevorzugt vollautomatische, also vollständig autonome Eingriffe durchgeführt, nachdem Fahrer in Situationen nach einer Kollision häufig nicht oder nur bedingt in der Lage sind, selbst zu einer Sicherung des Kraftfahrzeugs beizutragen. Grundsätzlich ist jedoch auch ein teilautonomer Eingriff denkbar, bei dem der Fahrer in seinem Handeln unterstützt wird, beispielsweise durch Visualisierung einer idealen Halteposition über ein Head Up-Display oder eine Verstärkung oder Abschwächung vom Fahrer vorgenommener Fahreingriffe.

Während es im Stand der Technik mithin üblich war, Sicherheitssysteme, die auf Kollisionen bezogen sind, nach der Kollision zu deaktivieren, wird erfindungsgemäß das Sicherheitssystem bis zum Verbringen des Kraftfahrzeugs in eine möglichst sichere Zielstellung weiter betrieben, so dass ein derartiges Sicherheitssystem auch als "intelligente Multikollisionskontrolle" bezeichnet werden kann.

In vorteilhafter weiterer Ausgestaltung der vorliegenden Erfindung kann vorgesehen sein, dass die Zieltrajektorie unter Berücksichtigung von vor der Kollision ermittelten Umfelddaten über das Umfeld des Kraftfahrzeugs ermittelt wird. Alternativ oder zusätzlich kann vorgesehen sein, dass die Zieltrajektorie schon vor der Kollision ermittelt wird. Es werden also potentielle Strategien im Hinblick auf Folgekollisionen bereits vor der Kollision berechnet, so dass der eventuelle Ausfall notwendiger Systeme während der ersten Kollision bestmöglich kompensiert werden kann. Fallen beispielsweise Umfeldsensoren aus, so können die letzten vor der Folgekollision ermittelten Daten weiter genutzt werden, insbesondere jene, bei denen nur eine sehr langsame Veränderung denkbar ist. Dabei kann, worauf im Folgenden noch näher eingegangen werden wird, die Berechnung kontinuierlich bis zum endgültigen Stillstand des Kraftfahrzeugs unter Nutzung der aktuellen und/oder zuvor ermittelten Daten weitergeführt werden, wobei vorteilhafterweise eine ständige Überwachung und Berücksichtigung der Funktionalität der relevanten Datenquellen, insbesondere Sensoren, und Aktuatoren erfolgt.

In diesem Zusammenhang ist es vorteilhaft, wenn bei einer bereits vor der Kollision ermittelten Zieltrajektorie durch Ansteuerung wenigstens eines Fahrzeugsystems die Kollision unter Berücksichtigung der Zieltrajektorie beeinflusst wird. Nachdem vorgesehen sein kann, dass das erfindungsgemäß betriebene Sicherheitssystem auch die Steuerung bezüglich der Erstkollision übernimmt, liegen üblicherweise bereits Kriterien vor, die die Erstkollision bestimmen und auf die Kollisionsfolgenminderung abzielen. Nichtsdestotrotz lassen auch diese bereits vorliegenden Erstkollisionskriterien noch Freiheitsgrade offen, die im Rahmen der vorliegenden Erfindung im Hinblick auf die Zieltrajektorie ausgenutzt werden können, beispielsweise, wenn entschieden wird, in welche Richtung ein Ausweichmanöver versucht wird und dergleichen. So können beispielsweise Freiheitsgrade in der Wahl des Auftreffpunktes ausgenutzt werden. Relevant ist jedoch, dass keinerlei Abstriche bezüglich der Sicherheit der Erstkollision vorgenommen werden.

Die Erfindung sieht vor, dass die Zieltrajektorie unter Berücksichtigung eines Umfeldmodells ermittelt wird, in dem verschiedenen Stillstandspositionen im Umfeld des Kraftfahrzeugs jeweils ein die Sicherheit der Stillstandsposition im Hinblick auf Zweitkollisionen beschreibender Wert zugeordnet wird. Umfeldmodelle sind im Stand der Technik bereits grundsätzlich bekannt und existieren in verschiedenen Ausprägungen, bei denen jedoch üblicherweise Bereichen und/oder Objekten verschiedene Attribute zugeordnet sind. Erfindungsgemäß wird dann vorgeschlagen, zumindest im Vorfeld einer Kollision, also beispielsweise, sobald diese als unvermeidbar angesehen wird, in dem Umfeldmodell ein weiteres Attribut zu hinterlegen, das ein die Sicherheit der Stillstandsposition im Hinblick auf Zweitkollisionen beschreibender Wert ist. Beispielsweise kann eine Art "Ampelkarte" der Umgebung vorgesehen werden, die rote, gelbe und grüne Zonen, je nach der Sicherheit der dortigen Zielstellung, umfasst. Die Berechnung der sichersten Zielpositionen kann allgemein, insbesondere auch im Hinblick auf derartige Umfeldmodelle, so erfolgen, dass ein potentieller Folgekollisionsschwerewert ermittelt wird und der niedrigste potentielle Folgekollisionsschwerewert für die Zielstellung herangezogen wird. Ein solcher potentieller Folgekollisionsschwerewert kann auch der die Sicherheit der Stillstandsposition im Hinblick auf Zweitkollisionen beschreibende Wert im Umfeldmodell sein. Erfindungsgemäß werden diese Werte bereits vor der Erstkollision ermittelt, da dann selbst im Falle eines Wegfalls von aktuellen Umfelddaten bereits eine vorbestimmte Information vorliegt, die auch darüber hinaus genutzt werden kann.

Dabei sei an dieser Stelle noch darauf hingewiesen, dass es im Rahmen der vorliegenden Erfindung auch nützlich ist, ein Fahrzustandsmodell des Kraftfahrzeugs zu betrachten, also ein Modell des Fahrzustands des Kraftfahrzeugs. Auch derartige Fahrzustandsmodelle sind im Stand der Technik bereits bekannt. Sie berücksichtigen Egodaten, also beispielsweise Fahrdynamikdaten des eigenen Kraftfahrzeugs, um den aktuellen Zustand des Kraftfahrzeugs selber zusätzlich zum Umfeldmodell beschreiben zu können.

Die Ermittlung und die Auslösung von Eingriffsstrategien erfolgt dann in Abhängigkeit der erkannten/berechneten Gefahrensituation anhand des Umfeldmodells und des Fahrzustandsmodells, wobei bezüglich der Umwelt beispielsweise Aspekte wie der aktuelle Aktionsraum des Kraftfahrzeugs, der Streckenverlauf, das Vorhandensein von Straßengräben und Abhängen, die Lage von Gegenspuren und dergleichen berücksichtigt werden können.

Besonders vorteilhaft ist es, wenn bei der Ermittlung der Sicherheit der Zielstellung und/oder einer Stillstandsposition im Rahmen einer Umfelderfassung ermittelte mögliche statische und/oder bewegte Kollisionspartner berücksichtigt werden, insbesondere die Art des möglichen Kollisionspartners und/oder dessen aktuelle Dynamik und/oder dessen prädizierte Trajektorie. Orientiert werden kann die Ermittlung der Zielstellung und somit der Zieltrajektorie also hauptsächlich an möglichen Kollisionspartner für eine Zweitkollision, die im Übrigen auch den Kollisionspartner der Erstkollision umfassen können. Es kann also beispielsweise die Art eines möglichen Zweitkollisionspartners berücksichtigt werden, beispielsweise dessen Möglichkeit zur Energieaufnahme, dessen Klassifikation als Baum, Leitplanke, Fußgänger, Lastkraftwagen und dergleichen. Weiterhin kann dessen aktuelle, erwartete und mögliche Trajektorie berücksichtigt werden, insbesondere auch im Hinblick auf die Einleitung eines Ausweichmanövers eines entgegenkommenden Kraftfahrzeugs, wenn das eigene Kraftfahrzeug auf seine eigentliche Fahrbahn schleudert und dergleichen.

Es kann ferner vorgesehen sein, dass, insbesondere nach der Kollision, eine ständige Überwachung der Funktionsfähigkeit von insbesondere auf die Umgebung bezogene Daten (Umfelddaten) liefernde Datenquellen, insbesondere Sensoren, stattfindet, wobei bei Wegfall einer Datenquelle wenigstens teilweise auf vor der Kollision aufgezeichnete Daten der Datenquelle zurückgegriffen wird.

Wie bereits erwähnt, kann eine ständige Überwachung von Datenquellen, insbesondere Sensoren, stattfinden, die durch die Erstkollision beschädigt werden könnten. Liegt eine solche Beschädigung vor, ist es, wie bereits dargelegt, denkbar, auf deren vor der Erstkollision aufgezeichnete Daten zurückzugreifen. Diagnosefunktionen, die einen Ausfall von Sensorik oder sonstigen Datenquellen melden, sind bereits grundsätzlich bekannt, jedoch kann vorliegend auch ein Ausbau dieser Diagnosefunktionen im Hinblick auf die Genauigkeit der Aussagen über die Beschädigung vorgesehen werden. Ist beispielsweise ein Sensor grundsätzlich noch funktionsfähig, befindet er sich jedoch in einer durch die Kollision bedingten völlig falschen, insbesondere sinnvolle Messdaten verhindernden Ausrichtung, kann er dennoch als aktuell nicht verlässlich oder nur teilweise verlässlich gekennzeichnet werden. Solche Informationen können beispielsweise durch eine Plausibilitätsüberprüfung von aufgenommenen Sensordaten gewonnen werden.

Analog zu einer Überwachung der Datenquellen ist vorzugsweise auch vorgesehen, dass, insbesondere nach der Kollision, eine ständige Überwachung von anzusteuernden Fahrzeugsystemen, insbesondere eines Bremssystems und/oder Motors und/oder einer Lenkung, stattfindet, wobei nach einem wenigstens teilweisen Ausfall eines anzusteuernden Fahrzeugsystems bei einer Nichterreichbarkeit der Zielstellung und/oder der Zieltrajektorie eine Neuberechnung der Zielstellung und/oder der Zieltrajektorie erfolgt und/oder der wenigstens teilweise Ausfall bei einer zyklischen Neuberechnung der Zielstellung und/oder der Zieltrajektorie berücksichtigt wird. Auch bezüglich der Aktuatorik kann mithin vorgesehen sein, eine ständige Diagnose durchzuführen, wobei es hier besonders vorteilhaft ist, wenn eine Diagnoseeinrichtung eine Information über den verbliebenen Funktionsumfang liefert. Ist beispielsweise eine Lenkung nur teilweise beschädigt, kann angegeben werden, wie und gegebenenfalls mit welchem Versatz ein Lenken des Kraftfahrzeugs noch möglich ist, was beispielsweise eine Anpassung der Zielstellung und/oder der Zieltrajektorie erfordern kann. Ähnlich kann beispielsweise, wenn nur noch eine bestimmte Leistung eines Motors zur Verfügung steht, diese dem Sicherheitssystem für seine Berechnungen zur Verfügung gestellt werden. Vorzugsweise wird die Ermittlung zyklisch bis zum endgültigen Stillstand des Kraftfahrzeugs fortgeführt, wobei ständig die Überwachung und Berücksichtigung der Funktionalität der relevanten Datenquellen und Aktuatoren erfolgt.

In diesem Zusammenhang ist es besonders vorteilhaft, wenn über wenigstens ein Kommunikationsmittel zur Kommunikation mit anderen Verkehrsteilnehmern eine Nachricht betreffend den wenigstens teilweisen Ausfall eines Fahrzeugsystems gesendet wird. Während eine Kraftfahrzeug-zu-Kraftfahrzeug-Kommunikation (Car-2-Car) und eine Kraftfahrzeug-zu-X-Kommunikation (Car-2-X) als Datenquelle genutzt werden kann, letztlich äquivalent einem Sensor, ist auch eine weitergehende Nutzung dahingehend möglich, dass beispielsweise von einer Diagnoseeinrichtung des Sicherheitssystems festgestellte Unzulänglichkeiten einzelner Fahrzeugsysteme anderen Verkehrsteilnehmern mitgeteilt werden. Auf diese Weise kann dessen Steuerung, insbesondere im Rahmen von bei den weiteren Verkehrsteilnehmern vorgesehenen Sicherheitssystemen, so angepasst werden, dass die Einschränkungen des Kraftfahrzeugs berücksichtigt werden.

Insbesondere kann hier vorgesehen sein, dass eine Kommunikation über wenigstens ein Kommunikationsmittel zur Kommunikation mit anderen Verkehrsteilnehmern zur Abstimmung einer Ausweich- und Abstellstrategie verwendet wird. Es ist also im Rahmen des erfindungsgemäßen Verfahrens auch möglich, Car-2-Car- und/oder Car-2-X-Kommunikation zu nutzen, um eine abgestimmte Ausweich- und Ausrichtungsstrategie der Verkehrsteilnehmer zu ermöglichen, insbesondere auch im Hinblick auf mögliche Zweitkollisionen.

Ferner ist es denkbar, dass eine Übertragung von die Zweitkollision beschreibenden Daten an einen zentralen Server, insbesondere eine Verkehrsleitzentrale, erfolgt. Auf diese Weise kann eine frühe Information einer Verkehrsleitzentrale über die Kollision erreicht werden, insbesondere auch im Hinblick auf verkehrsleitenden Maßnahmen nach dem Unfall. Zudem kann auch eine erste Abschätzung erfolgen, inwieweit eine Behinderung auftreten wird, nachdem sozusagen aus erster Hand Daten erhalten werden. Ein Erreichen der sicheren Zielstellung kann ebenso im weiteren Verlauf einer Verkehrsleitzentrale mitgeteilt werden, so dass auch diesbezüglich die Situation dort genauer bewertet werden kann.

In Weiterbildung der vorliegenden Erfindung kann vorgesehen sein, dass neben einem Bremssystem und/oder einem Lenksystem und/oder einem Motor auch weitere Fahrzeugsysteme zur Einnahme der Zielstellung angesteuert werden, insbesondere ein ESP-System und/oder ein aktives Fahrwerkssystem und/oder ein aktives Feder- und/oder Dämpfersystem und/oder ein aktives Stabilisatorsystem und/oder eine aufstellbare Motorhaube und/oder ein System zur Anpassung der Trimmlage. Neben klassischen Längs- und Querführungseingriffen im Rahmen beispielsweise einer Aktiv-Lenkung, auch einer Hinterachs-Lenkung, bzw. einer elektrischen Lenkung und/oder einem Bremssystem und/oder einem Motorsteuergerät sind auch weitere nutzbare Aktuatoren denkbar. So kann beispielsweise ein ESP-Eingriff analog einer ESP-Rollover-Funktionalität erfolgen, worin zur Vermeidung von Überschlägen die Seitenführung der Vorderachse reduziert wird. Zur Anpassung der Trimmlage, also beispielsweise zur seitlichen Anhebung des Kraftfahrzeugs, um die Seitenaufprallzone zu optimieren, kann beispielsweise als aktives Fahrwerkssystem ein System genutzt werden, welches eine Höhenverstellbarkeit für jede Seite bietet. Ersichtlich sind eine Vielzahl vorteilhafter Möglichkeiten denkbar, die Sicherheit des Kraftfahrzeugs auch nach der Erstkollision zu erhöhen.

In weiterer Ausgestaltung der vorliegenden Erfindung kann vorgesehen sein, dass bei der Ermittlung der Zielstellung und/oder der Zieltrajektorie eine Information über die Sitzplatzbelegung und/oder der Beladungszustand des Kraftfahrzeugs und/oder eine Information über die Fahrzeugstruktur und/oder ein ortsbezogenes Deformationspotential, insbesondere unter Berücksichtigung von Vorschäden und/oder Schäden durch die Kollision, und/oder eine Information über bei Kollisionen kritische Bereiche des Kraftfahrzeugs berücksichtigt wird. Derartige Informationen sind nützlich, um die Sicherheit einer Zielstellung und/oder die Durchführbarkeit und Sicherheit einer Zieltrajektorie beurteilen zu können. So kann beispielsweise aus einer Information über die Sitzplatzbelegung, die beispielsweise über einen Sitzplatzbelegungssensor gewonnen werden kann, gefolgert werden, ob ein Beifahrer existiert. Existiert kein Beifahrer, kann eine verstärkte Nutzung der Crashbereiche der Beifahrerseite in Betracht gezogen werden, beispielsweise, indem das Kraftfahrzeug mit der Beifahrerseite in die Richtung eines möglichen Zweitkollisionspartners gedreht wird. Eine Information über den Beladungszustand kann nützlich sein, wenn Rollover-Unfälle vermieden werden sollen. Auch Informationen über die Fahrzeugstruktur und das Energieabsorptions-Potential sind relevant und vorteilhaft zu berücksichtigen, nachdem hierbei beispielsweise Deformationszonen für Zweitkollisionen, die noch nicht beim Erstunfall genutzt wurden, berücksichtigt werden können und dergleichen. So kann beispielsweise, wenn eine Deformationszone durch die Kollision bereits vollständig ausgenutzt ist, das Kraftfahrzeug so orientiert werden, dass andere Deformationszonen in Richtung möglicher Zweitkollisionspartner gedreht werden. Auch Informationen über bei Kollisionen kritische Bereiche des Kraftfahrzeugs werden vorzugsweise berücksichtigt, beispielsweise also die Lage von Tank, Batterie und dergleichen. So kann im Hinblick auf Folgekollisionen die Zielstellung und/oder die Zieltrajektorie so gewählt werden, dass Kollisionen in diesen Zonen bzw. Bereichen aktiv vermieden werden.

Ferner kann vorgesehen sein, dass die Ermittlung der Zielstellung und/oder der Zieltrajektorie unter Berücksichtigung der Daten eines Giermomentensensors und/oder eines Beschleunigungssensors und/oder eines Wankwinkelsensors und/oder eines Nickwinkelsensors und/oder eines Lenkwinkelsensors und/oder eines Reibwertsensors und/oder eines längsführenden Fahrerassistenzsystems und/oder einer Kamera und/oder eines Laserscanners und/oder eines Radarsensors und/oder eines Ultraschallsensors und/oder eines Infrarotsensors und/oder eines LIDAR-Sensors und/oder eines GPS-Sensors und/oder eines Kommunikationsmittels zur Kommunikation mit anderen Verkehrsteilnehmern und/oder eines Crashsensors erfolgt. Selbstverständlich sind diese Sensoren und Datenquellen, deren Daten selbstverständlich auch im Rahmen einer Datenfusion bzw. Informationsfusion zusammenführbar sind, nur beispielhaft zu betrachten; es ist durchaus auch möglich, andere und/oder weitere Sensoren und/oder Datenquellen zu nutzen.

Wie bereits erwähnt, kann vorgesehen sein, insbesondere dann, wenn ein teilautonomer Fahreingriff erfolgen soll, dass ein Fahrer bei der Einnahme der sicheren Zielstellung unterstützt wird, insbesondere durch eine Verstärkung und/oder Abschwächung von von einem Fahrer vorgenommenen Längsführungseingriffen und/oder Querführungseingriffen und/oder durch Anzeige der Zielstellung und/oder einer Zielposition und/oder einer Zielorientierung der Zielstellung, insbesondere an einem Head-Up-Display.

Neben dem Verfahren betrifft die vorliegende Erfindung auch ein Kraftfahrzeug, umfassend ein Sicherheitssystem mit einem zur Durchführung des erfindungsgemäßen Verfahrens ausgebildeten Steuergerät. Sämtliche Ausführungen bezüglich des erfindungsgemäßen Verfahrens lassen sich analog auf das erfindungsgemäße Kraftfahrzeug übertragen, so dass mit diesem dieselben Vorteile erreicht werden können.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Kraftfahrzeugs, und
- Fig. 2: eine Prinzipskizze zur Erläuterung eines erweiterten Umfeldmodells.

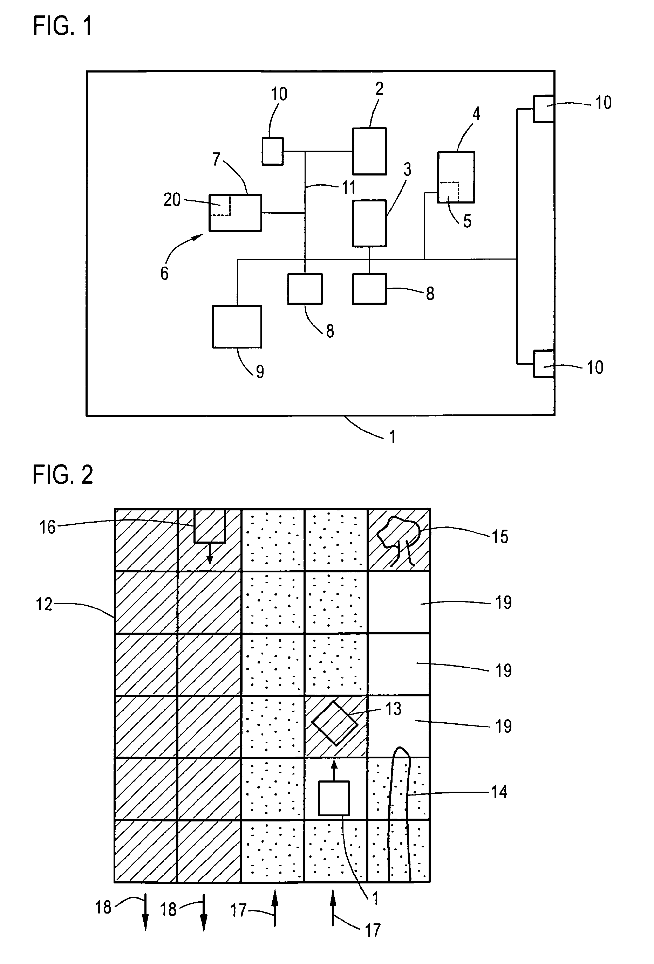

Fig. 1 zeigt eine Prinzipskizze eines erfindungsgemäßen Kraftfahrzeugs 1. Es umfasst, wie grundsätzlich bekannt, ein Lenksystem 2, ein Bremssystem 3 und einen Motor 4 mit einem Motorsteuergerät 5. Neben einem Sicherheitssystem 6 zur intelligenten Multikollisionskontrolle, welches ein zur Durchführung des erfindungsgemäßen Verfahrens ausgebildetes Steuergerät 7 aufweist, sind weitere Fahrzeugsysteme 8, insbesondere umfassend Fahrerassistenzsysteme, vorgesehen, die hier nur angedeutet sind. Das Kraftfahrzeug ist ferner zur Kommunikation mit anderen Verkehrsteilnehmern (Car-2-X-Kommunikation) ausgebildet und umfasst daher ein Kommunikationsmittel 9.

Um die verschiedenen Fahrzeugsysteme 2, 3, 4, 6, 8, 9 mit Eingangsdaten für ihre Funktionen zu versorgen, umfasst das Kraftfahrzeug 1 auch verschiedene Sensoren 10, von denen in Fig. 1 nur drei beispielhaft dargestellt sind. Zur Kommunikation innerhalb des Kraftfahrzeugs 1 ist ein Bussystem 11, hier ein CAN-Bus, vorgesehen.

Die konkret vorgesehenen und von dem Sicherheitssystem 6 auch nutzbaren Sensoren umfassen vorliegend einen Giermomentensensor, einen Beschleunigungssensor, einen Wankwinkelsensor, einen Nickwinkelsensor, einen Lenkwinkelsensor, einen Reibwertsensor, eine Kamera, einen Laserscanner, einen Radarsensor, einen Ultraschallsensor, einen Infrarotsensor, einen LIDAR-Sensor, einen GPS-Sensor und einen Crashsensor, wobei selbstverständlich auch weitere Sensoren vorgesehen sein können. Die weiteren Fahrzeugsysteme, die teilweise durch das Sicherheitssystem 6 angesteuert werden können, umfassen ein ESP-System, ein aktives Fahrwerkssystem, ein aktives Feder- und/oder Dämpfersystem, ein aktives Stabilisatorsystem, eine aufstellbare Motorhaube und ein längsführendes Fahrerassistenzsystem, hier ein ACC-System, welches auch Umgebungsdaten oder dergleichen als Datenquelle liefern kann.

Wie bereits erwähnt, ist das Steuergerät 7 zur Durchführung des erfindungsgemäßen Verfahrens ausgebildet, das bedeutet, es nutzt in einem Umfeldmodell und einem Fahrzustandsmodell aufbereitete Daten der beschriebenen Datenquellen, insbesondere anderer Fahrzeugsysteme 8, des Kommunikationsmittels 9 und der Sensoren 10, um bei einer festgestellten unvermeidlichen Kollision - das Sicherheitssystem 6 ist auch als System zur Kollisionsfolgenminderung und/oder Kollisionsvermeidung ausgebildet - eine im Hinblick auf Zweitkollisionen sichere Stellung zu ermitteln, woraus auch eine nach der Kollision zu realisierende Zieltrajektorie, die zu der Zielstellung führt, bestimmt wird. Zudem ist das Steuergerät 6 zur Aussendung von Steuerbefehlen ausgebildet, über die wenigstens ein autonomer Fahreingriff zur Realisierung der Zieltrajektorie in Form wenigstens eines Längsführungsgriffs und/oder Querführungseingriffs vorgenommen wird. Diese Ermittlung der Zieltrajektorie findet kontinuierlich in dem Sinne statt, dass letztlich zyklisch die aktuelle Sicherheit und Erreichbarkeit überprüft wird. Die Ermittlung der Zielstellung und der Zieltrajektorie beginnt, sobald eine unvermeidliche Kollision festgestellt wurde, mithin auch schon vor der Kollision, und wird erst beendet, wenn das Kraftfahrzeug, insbesondere in der Zielstellung, zum Stillstand gekommen ist. Dadurch, dass auch vor der Kollision bereits eine sichere Zielstellung aufgesucht wird, kann, wenn im Bezug auf die Sicherheit der Kollision selbst Freiheitsgrade bestehen, die Kollision auch unter Berücksichtigung der Zieltrajektorie beeinflusst werden.

Grundlage der Ermittlung der Zielstellung und der Zieltrajektorie sind ein Umfeldmodell und ein Fahrzustandsmodell. Ein Umfeldmodell ist grundsätzlich bekannt, wobei beispielsweise ein Umfeldmodell benutzt werden kann, welches bestimmten Umgebungsbereichen bestimmte Attribute zuordnet. Dabei ist im hier beschriebenen Ausführungsbeispiel vorgesehen, dass verschiedenen Stillstandspositionen im Umfeld des Kraftfahrzeugs 1 jeweils ein die Sicherheit der Stillstandsposition im Hinblick auf die Zweitkollision beschreibender Wert zugeordnet wird (andere Aspekte der Zielstellung neben der Zielposition, also insbesondere eine Zielorientierung bzw. Zielausrichtung, werden im Folgenden noch näher diskutiert werden). Hierzu wird, beispielsweise für die im Umfeldmodell abgedeckten Bereiche, ein potentieller Folgekollisionsschwerewert ermittelt und als Attribut den Bereichen zugeordnet, wie dies durch Fig. 2 in Form einer Prinzipskizze näher erläutert werden soll. Gezeigt ist das Kraftfahrzeug 1 und eine Umgebung 12 des Kraftfahrzeugs 1. Das Kraftfahrzeug 1 bewegt sich, nachdem eine unvermeidliche Kollision ansteht, auf den Kollisionspartner 13 der Erstkollision zu. Ferner zu erkennen sind ein Straßengraben 14, ein Baum 15 und ein entgegenkommendes Kraftfahrzeug 16. Spuren in der Fahrtrichtung des Kraftfahrzeugs 1 sind bei 17 angedeutet, Spuren in der Gegenrichtung bei 18.

Durch Analyse der Umgebungssituation unter Berücksichtigung möglicher Kollisionspartner für eine weitere Kollision, wobei auch deren Art, aktuelle Dynamik und dergleichen berücksichtigt wird, kann nun den verschiedenen Bereichen ein potentieller Folgekollisionsschwerewert, der die Sicherheit von Stillstandspositionen in diesem Bereich im Hinblick auf Zweitkollisionen beschreibt, zugeordnet werden. Durch das entgegenkommende Kraftfahrzeug 16 verschlimmert, sind die Spuren 18 des Gegenverkehrs ein nicht gewünschter Abstellort, genau wie der Bereich des Baums 15 oder des Kollisionspartners 13. Diese Bereiche können beispielsweise mit "rot" bewertet werden. Sicherer ist es auf den eigenen Fahrspuren 17 und im Straßengraben 14, der jedoch gegebenenfalls weitere Schäden verursachen könnte. Diese Bereiche können beispielsweise mit "gelb" bewertet werden. Seitlich der Straße, in ebenen, hindernisfreien Bereichen 19 sind hier jedoch recht sichere Abstellorte gegeben ("grün"). Dort könnte vorliegend beispielsweise die Zielposition der Zielstellung verortet werden.

Doch auch im Hinblick auf die Ausrichtung des Kraftfahrzeugs werden Betrachtungen angestellt, so dass die Zielorientierung bzw. die Zielausrichtung des Kraftfahrzeugs 1 auch eine Rolle spielen, indem beispielsweise berücksichtigt wird, wo Insassen sitzen, wo noch Deformationsbereiche gegeben sind und dergleichen. Berücksichtigt werden kann beispielsweise die Sitzplatzbelegung.

Ist beispielsweise kein Beifahrer gegeben, kann die Beifahrerseite gezielt in Richtung der Folgekollisionsrisikobereiche gedreht werden. Auch die Berücksichtigung von Informationen über den Beladungszustand hinsichtlich des Vermeidens von Rollover-Crashs als Folgekollisionen ist denkbar, ferner die Fahrzeugstruktur und das Energieabsorptions-Potential, wobei hier auch Vorschäden beachtet werden können. Die Zielstellung wird zudem so gewählt, dass auch kollisionssensible Fahrzeugbereiche wie der Tank, die Batterie und dergleichen möglichst vor Kollisionen geschützt sind. Auch bei bekannten Fahrzeug-Vorschäden können Bereiche "sicherer" ausgerichtet werden. Es ist schließlich denkbar, in der Zielstellung auch die Trimmlage des Kraftfahrzeugs 1 anzupassen, beispielsweise das Kraftfahrzeug 1 auf einer Seite anzuheben, um die Seitenaufprallzone zu optimieren.

Beim erfindungsgemäßen Verfahren werden ständig, während Zielstellung und Zieltrajektorie zyklisch neu ermittelt werden, die verfügbaren Datenquellen und Aktuatoren auf ihre Funktionsfähigkeit hin überwacht und diagnostiziert. Hierfür kann das Steuergerät 7 eine dedizierte Diagnoseeinrichtung 20 umfassen, diese kann jedoch auch extern vorgesehen sein. Die Diagnoseeinrichtung 20 überprüft, ob Systeme gänzlich ausgefallen oder in ihrer Funktionalität eingeschränkt sind. Mithin wird für alle Datenquellen und Aktuatoren ein deren Funktionsfähigkeit beschreibender Wert ermittelt, im Beispiel des Lenksystems 2 beispielsweise, in welchen Winkelbereichen noch eine Lenkung möglich ist und dergleichen. Insbesondere sind somit Schäden durch die unvermeidliche Erstkollision früh bekannt und können berücksichtigt werden, um die Zieltrajektorie und die Zielstellung neu zu bestimmen. Dabei ist es im Übrigen im erfindungsgemäßen Verfahren denkbar, bei Ausfall einer Datenquelle zuvor empfangene Daten dieser Datenquelle, insbesondere also eines Umgebungssensos, weiter zu verwerten. Daher ist es auch besonders vorteilhaft, wenn ein Umfeldmodell vor dem Kollisionszeitpunkt bereits um die Zusatzinformation erweitert ist. Auch die Funktionalität der Aktuatoren, allen voran des Lenksystems 2, des Bremssystems 3 und des Motors 4, wird ständig berücksichtigt und fließt in die Berechnung der Zielstellung und der Zieltrajektorie ein, da beispielsweise der Aktionsradius des Kraftfahrzeugs 1 eingeschränkt sein kann und dergleichen.

Es sei an dieser Stelle noch angemerkt, dass auch über das Kommunikationsmittel 9 empfangene Daten vorteilhaft im Sicherheitssystem 6 verwertet werden können, so dass auch dieses als eine Art Sensor eine Datenquelle bildet. Vorteilhaft ist es zudem auch, dass im vorliegenden Ausführungsbeispiel bei Ausfällen bestimmter Fahrzeugsysteme des Kraftfahrzeugs 1 diese das Kommunikationsmittel 9 anderen Verkehrsteilnehmern mitgeteilt werden, so dass jene beispielsweise ihre Ausweichstrategien anpassen können. Ohnehin kann das Sicherheitssystem 6 grundsätzlich so ausgebildet sein, dass über die Kommunikation mit anderen Verkehrsteilnehmern eine Abstimmung von Ausweich- und Abstellstrategien erfolgen kann.

Abschließend sei angemerkt, dass es in einem anderen Ausführungsbeispiel des erfindungsgemäßen Verfahrens auch möglich ist, lediglich teilautonom den Fahrer dabei zu unterstützen, selbst eine sichere Zielstellung einzunehmen. Beispielsweise kann eine Verstärkung bzw. Abschwächung von vom Fahrer vorgenommenen Eingriffen erfolgen, beispielsweise dann, wenn der Fahrer das Lenkrad "verreißt" und dergleichen. Auch eine Anzeige der Zielstellung, beispielsweise über ein hier nicht näher dargestelltes Head-Up-Display des Kraftfahrzeugs 1, kann zur Unterstützung des Fahrers, wenn dieser die sichere Zielstellung im Wesentlichen selbst einnehmen soll, realisiert werden.

## Patentansprüche

1. Verfahren zum Betrieb eines Sicherheitssystems (6) eines Kraftfahrzeugs (1), insbesondere eines Systems zur Kollisionsfolgenminderung bei einer unvermeidlichen Kollision,
wobei bei einer unvermeidlichen Kollision durch das Sicherheitssystem (6) eine einer im Hinblick auf Zweitkollisionen sicheren Zielstellung zugeordnete, nach der Kollision zu realisierende Zieltrajektorie des Kraftfahrzeugs (1) ermittelt wird und wenigstens ein autonomer und/oder unterstützender Fahreingriff in Form wenigstens eines Längsführungseingriffs und/oder Querführungseingriffs zur Realisierung der Zieltrajektorie vorgenommen wird, **dadurch gekennzeichnet, dass** die Zieltrajektorie unter Berücksichtigung eines Umfeldmodells ermittelt wird, in dem verschiedenen Stillstandspositionen im Umfeld (12) des Kraftfahrzeugs (1) jeweils ein die Sicherheit der Stillstandsposition im Hinblick auf Zweitkollisionen beschreibender Wert zugeordnet wird, welche Werte bereits vor der Erstkollision ermittelt werden.

2. Verfahren nach Anspruch 1,
**dadurch gekennzeichnet,**
**dass** die Zieltrajektorie unter Berücksichtung von vor der Kollision ermittelten Umfelddaten über das Umfeld (12) des Kraftfahrzeugs (1) und/oder die Zieltrajektorie schon vor der Kollision ermittelt wird.

3. Verfahren nach Anspruch 2,
**dadurch gekennzeichnet,**
**dass** bei einer bereits vor der Kollision ermittelten Zieltrajektorie durch Ansteuerung wenigstens eines Fahrzeugsystems (2, 3, 4, 8) die Kollision unter Berücksichtigung der Zieltrajektorie beeinflusst wird.

4. Verfahren nach einem der vorangehenden Ansprüche,
**dadurch gekennzeichnet,**
**dass** bei der Ermittlung der Sicherheit der Zielstellung und/oder einer Stillstandsposition im Rahmen einer Umfelderfassung ermittelte mögliche statische und/oder bewegte Kollisionspartner berücksichtigt werden, insbesondere die Art des möglichen Kollisionspartners und/oder dessen aktuelle Dynamik und/oder dessen prädizierte Trajektorie.

5. Verfahren nach einem der vorangehenden Ansprüche,
**dadurch gekennzeichnet,**
**dass**, insbesondere nach der Kollision, eine ständige Überwachung der Funktionsfähigkeit von insbesondere auf die Umgebung (12) bezogene Daten liefernden Datenquellen, insbesondere Sensoren (10), stattfindet, wobei bei Wegfall einer Datenquelle wenigstens teilweise auf vor der Kollision aufgezeichnete Daten der Datenquelle zurückgegriffen wird.

6. Verfahren nach einem der vorangehenden Ansprüche,
**dadurch gekennzeichnet,**
**dass**, insbesondere nach der Kollision, eine ständige Überwachung von anzusteuernden Fahrzeugsystemen (2, 3, 4, 8), insbesondere eines Bremssystems (3) und/oder Motors (4) und/oder einer Lenkung (2), stattfindet, wobei bei einem wenigstens teilweisen Ausfall eines anzusteuernden Fahrzeugsystems (2, 3, 4, 8) bei einer Nichterreichbarkeit der Zielstellung und/oder der Zieltrajektorie eine Neuberechnung der Zielstellung und/oder der Zieltrajektorie erfolgt und/oder der wenigstens teilweise Ausfall bei einer zyklischen Neuberechnung der Zielstellung und/oder der Zieltrajektorie berücksichtigt wird.

7. Verfahren nach Anspruch 6,
**dadurch gekennzeichnet,**
**dass** über wenigstens ein Kommunikationsmittel (9) zur Kommunikation mit anderen Verkehrsteilnehmern eine Nachricht betreffend den wenigstens teilweisen Ausfall eines Fahrzeugsystems (2, 3, 4, 8) gesendet wird.

8. Verfahren nach einem der vorangehenden Ansprüche,
**dadurch gekennzeichnet,**
**dass** neben einem Bremssystem (3) und/oder einem Lenksystem (2) und/oder einem Motor (4) auch weitere Fahrzeugsysteme (8) zur Einnahme der Zielstellung angesteuert werden, insbesondere ein ESP-System und/oder ein aktives Fahrwerkssystem und/oder eine aktives Feder- und/oder Dämpfersystem und/oder ein aktives Stabilisatorsystem und/oder eine aufstellbare Motorhaube und/oder ein System zur Anpassung der Trimmlage.

9. Verfahren nach einem der vorangehenden Ansprüche,
**dadurch gekennzeichnet,**
**dass** bei der Ermittlung der Zielstellung und/oder der Zieltrajektorie eine Information über die Sitzplatzbelegung und/oder der Beladungszustand des Kraftfahrzeugs (1) und/oder eine Information über die Fahrzeugstruktur und/oder ein ortsbezogenes Deformationspotential, insbesondere unter Berücksichtigung von Vorschäden und/oder Schäden durch die Kollision, und/oder eine Information über bei Kollisionen kritische Bereiche des Kraftfahrzeugs (1) berücksichtigt wird.

10. Verfahren nach einem der vorangehenden Ansprüche,
**dadurch gekennzeichnet,**
**dass** eine Kommunikation über wenigstens ein Kommunikationsmittel (9) zur Kommunikation mit anderen Verkehrsteilnehmern zur Abstimmung einer Ausweich- und/oder einer Abstellstrategie verwendet wird und/oder eine Übertragung von die Zweitkollision beschreibenden Daten an einen zentralen Server, insbesondere eine Verkehrsleitzentrale, erfolgt.

11. Verfahren nach einem der vorangehenden Ansprüche,
**dadurch gekennzeichnet,**
**dass** die Ermittlung der Zielstellung und/oder der Zieltrajektorie unter Berücksichtigung der Daten eines Giermomentensensors und/oder eines Beschleunigungssensors und/oder eines Wankwinkelsensors und/oder eines Nickwinkelsensors und/oder eines Lenkwinkelsensors und/oder eines Reibwertsensors und/oder eines längsführenden Fahrerassistenzsystems und/oder einer Kamera und/oder eines Laserscanners und/oder eines Radarsensors und/oder eines Ultraschallsensors und/oder eines Infrarotsensors und/oder eines LIDAR-Sensors und/oder eines GPS-Sensors und/oder eines Kommunikationsmittels zur Kommunikation mit anderen Verkehrsteilnehmern und/oder eines Crashsensors erfolgt.

12. Verfahren nach einem der vorangehenden Ansprüche,
**dadurch gekennzeichnet,**
**dass** ein Fahrer bei der Einnahme der sicheren Zielstellung unterstützt wird, insbesondere durch eine Verstärkung und/oder Abschwächung von von einem Fahrer vorgenommenen Längsführungseingriffen und/oder Querführungseingriffen und/oder durch Anzeige der Zielstellung und/oder einer Zielposition und/oder einer Zielorientierung der Zielstellung, insbesondere an einem Head-Up-Display.

13. Kraftfahrzeug (1), umfassend ein Sicherheitssystem (6) mit einem zur Durchführung eines Verfahrens nach einem der vorangehenden Ansprüche ausgebildeten Steuergerät (7).

## Claims

1. Method for operating a safety system (6) of a motor vehicle (1), in particular a system for mitigating the consequences of a collision in the event of an unavoidable collision,
in the event of an unavoidable collision, a target trajectory of the motor vehicle (1) which is to be achieved after the collision and is assigned to a target position which is safe with regard to secondary collisions being determined by the safety system (6), and at least one autonomous and/or supporting driving intervention in the form of at least one of a longitudinally guiding intervention and/or transversely guiding intervention being performed in order to achieve the target trajectory, **characterised in that** the target trajectory is determined taking account of an environmental model in which different stop positions in the environment (12) of the motor vehicle (1) are each assigned a value which describes the safety of the stop position with regard to secondary collisions, which values are already determined before the first collision.

2. Method according to claim 1, **characterised in that** the target trajectory is determined taking account of environmental data regarding the environment (12) of the motor vehicle (1) determined before the collision, and/or the target trajectory is already determined before the collision.

3. Method according to claim 2, **characterised in that**, in the case of a target trajectory already determined before the collision, the collision is influenced, taking account of the target trajectory, by means of controlling at least one vehicle system (2, 3, 4, 8).

4. Method according to any of the preceding claims, **characterised in that**, when determining the safety of the target position and/or a stop position, possible static and/or moving collision partners determined in the context of a detection of the environment are taken into account, in particular the type of the possible collision partner and/or the current momentum thereof and/or the predicted trajectory thereof.

5. Method according to any of the preceding claims, **characterised in that**, in particular after the collision, continuous monitoring of the operability of data sources, in particular sensors (10), which supply data relating in particular to the environment (12), occurs, data from the data source recorded before the collision being drawn on at least in part in the event of the loss of a data source.

6. Method according to any of the preceding claims, **characterised in that**, in particular after the collision, continuous monitoring of vehicle systems (2, 3, 4, 8) to be controlled, in particular a braking system (3) and/or engine (4) and/or a steering system (2), occurs, the target position and/or the target trajectory being recalculated in the event of a vehicle system (2, 3, 4, 8) to be controlled failing at least in part when it is not possible to achieve the target position and/or the target trajectory, and/or the at least partial failure being taken into account when cyclically recalculating the target position and/or the target trajectory.

7. Method according to claim 6, **characterised in that** a message regarding the at least partial failure of a vehicle system (2, 3, 4, 8) is sent via at least one communication means (9) for communicating with other road users.

8. Method according to any of the preceding claims, **characterised in that**, in addition to a braking system (3) and/or a steering system (2) and/or an engine (4), further vehicle systems (8) are also controlled in order to attain the target position, in particular an ESP system and/or an active chassis system and/or an active spring and/or damper system and/or an active stabiliser system and/or a raisable bonnet and/or a system for adjusting the trim position.

9. Method according to any of the preceding claims, **characterised in that**, when determining the target position and/or the target trajectory, information regarding the seat occupation and/or the loading state of the motor vehicle (1) and/or information regarding the structure of the vehicle and/or a local deformation potential, in particular taking account of previous damage and/or damage caused by the collision, and/or information regarding regions of the motor vehicle (1) which are critical in the case of collisions, is taken into account.

10. Method according to any of the preceding claims, **characterised in that** communication via at least one communication means (9) for communicating with other road users is used in order to coordinate an evasive and/or parking strategy, and/or data which describe the secondary collision are transmitted to a central server, in particular to a traffic control centre.

11. Method according to any of the preceding claims, **characterised in that** the target position and/or the target trajectory is determined taking account of the data from a yawing moment sensor and/or an acceleration sensor and/or a roll angle sensor and/or a pitch angle sensor and/or a steering angle sensor and/or a friction coefficient sensor and/or a longitudinally guiding driver assistance system and/or a camera and/or a laser scanner and/or a radar sensor and/or an ultrasonic sensor and/or an infrared sensor and/or a LIDAR sensor and/or a GPS sensor and/or a communication means for communicating with other road users, and/or a crash sensor.

12. Method according to any of the preceding claims, **characterised in that** a driver is assisted in attaining the safe target position, in particular by amplifying and/or attenuating longitudinally guiding interventions and/or transversely guiding interventions carried out by a driver, and/or by displaying the target position and/or a target location and/or a target orientation of the target position, in particular on a head-up display.

13. Motor vehicle (1) comprising a safety system (6) having a control device (7) designed for implementing a method according to any of the preceding claims.

## Revendications

1. Procédé de fonctionnement d'un système de sécurité (6) d'un véhicule automobile (1), en particulier d'un système pour réduire les conséquences d'une collision dans le cas d'une collision inévitable, dan
s lequel, lors d'une collision inévitable, on détermine via le système de sécurité (6) une trajectoire cible du véhicule automobile (1) affectée à une position cible sûre au regard de collisions doubles, à réaliser après la collision, et on effectue au moins une intervention de conduite autonome et/ou supplémentaire sous la forme d'au moins une manoeuvre de guidage longitudinale et/ou une manoeuvre de guidage transversale pour assurer la trajectoire cible, **caractérisé en ce que** la trajectoire cible est déterminée en tenant compte d'un modèle ambiant, dans lequel on affecte à diverses positions d'arrêt dans le milieu ambiant (12) du véhicule automobile (1), respectivement, une valeur décrivant la sécurité de la position d'arrêt au regard de collisions doubles, lesdites valeurs étant déjà déterminée avant la première collision.

2. Procédé selon la revendication 1,
**caractérisé en ce que** :
la trajectoire cible est déjà déterminée en tenant compte de données ambiantes déterminées avant la collision via le milieu ambiant (12) du véhicule automobile (1) et/ou la trajectoire cible avant la collision.

3. Procédé selon la revendication 2,
**caractérisé en ce que**,
dans le cas d'une trajectoire cible déjà déterminée avant la collision, la collision est influencée par commande au moins d'un système du véhicule (2, 3, 4, 8) en tenant compte de la trajectoire cible.

4. Procédé selon l'une quelconque des revendications précédentes,
**caractérisé en ce que**,
lors de la détermination de la sécurité de la position cible et/ou d'une position d'arrêt, on tient compte de partenaires de collision statiques et/ou déplacés éventuels déterminés dans le cadre d'une couverture ambiante, en particulier le type du partenaire de collision éventuel et/ou sa dynamique normale et/ou sa trajectoire prédite.

5. Procédé selon l'une quelconque des revendications précédentes,
**caractérisé en ce que**,
en particulier après la collision, il se produit un contrôle permanent de la fonctionnalité de sources de données délivrant des données se rapportant en particulier à l'environnement (12), notamment des capteurs (10), dans lequel, lors de la suppression d'une source de données, on retourne au moins en partie aux données de la source de données enregistrées avant la collision.

6. Procédé selon l'une quelconque des revendications précédentes,
**caractérisé en ce que**,
en particulier après la collision, il se produit un contrôle permanent de systèmes de l'automobile à commander (2, 3, 4, 8), en particulier d'un système de freinage (3) et/ou du moteur (4) et/ou d'une direction (2), dans lequel, dans le cas d'une panne au moins partielle d'un système du véhicule à commander (2, 3, 4, 8), lorsque la position cible et/ou la trajectoire cible n'ont pu être atteintes, il se produit un nouveau calcul de la position cible et/ou de la trajectoire cible et/ou la panne au moins partielle est prise en compte lors d'un nouveau calcul cyclique de la position cible et/ou de la trajectoire cible.

7. Procédé selon la revendication 6,
**caractérisé en ce que** :
on envoie, via au moins un moyen de communication (9) destiné à communiquer avec d'autres participants au trafic, un message concernant la panne au moins partielle d'un système du véhicule (2, 3, 4, 8).

8. Procédé selon l'une quelconque des revendications précédentes,
**caractérisé en ce que**,
en dehors d'un système de freinage (3) et/ou d'un système de direction (2) et/ou d'un moteur (4), d'autres systèmes du véhicule (8) sont également commandés pour saisir la position cible, en particulier un système de stabilisation électronique (ESP) et/ou un système de roulement actif et/ou un système actif de ressorts et/ou d'amortisseurs et/ou un système actif de stabilisateur et/ou un capot de moteur levant et/ou un système d'ajustement de l'assiette.

9. Procédé selon l'une quelconque des revendications précédentes,
**caractérisé en ce que**,
lors de la détermination de la position cible et/ou de la trajectoire cible, on tient compte d'une information sur l'occupation des sièges et/ou sur l'état de chargement du véhicule automobile (1) et/ou d'une information sur la structure du véhicule et/ou sur un potentiel de déformation local, en particulier en tenant compte des dégâts antérieurs et/ou de dégâts dus à la collision, et/ou d'une information sur les zones critiques du véhicule automobile (1) en cas de collisions.

10. Procédé selon l'une quelconque des revendications précédentes,
**caractérisé en ce que** :
l'on utilise une communication via au moins un moyen de communication (9) pour communiquer avec d'autres participants au trafic pour adapter une stratégie d'évitement et/ou d'arrêt et/ou il se produit une transmission de données décrivant la collision double à un serveur central, en particulier une centrale de guidage du trafic routier.

11. Procédé selon l'une quelconque des revendications précédentes,
**caractérisé en ce que** :
la détermination de la position cible et/ou de la trajectoire cible se fait en tenant compte des données d'un capteur de moment de lacet et/ou d'un capteur d'accélération et/ou d'un capteur de roulis et/ou d'un capteur de tangage et/ou d'un capteur d'angle de direction et/ou d'un capteur de coefficient de frottement et/ou d'un système d'assistance au conducteur en guidage longitudinal et/ou d'une caméra et/ou d'un scanneur à laser et/ou d'un capteur radar et/ou d'un capteur à ultrasons et/ou d'un capteur à infrarouges et/ou d'un capteur LIDAR et/ou d'un capteur GPS et/ou d'un moyen de communication pour communiquer avec d'autres participants au trafic routier et/ou d'un capteur de collision.

12. Procédé selon l'une quelconque des revendications précédentes,
**caractérisé en ce que** :
un conducteur est soutenu lors de la saisie de la position cible sûre, en particulier par un renforcement et/ou une atténuation d'intervention en guidage longitudinal et/ou d'interventions en guidage transversal effectuées par un conducteur et/ou par affichage de la position cible et/ou d'un positionnement cible et/ou d'un orientation cible de la position cible, notamment sur un affichage de type Head-Up-Display.

13. Véhicule automobile (1) comprenant un système de sécurité (6) avec un appareil de commande (7) conformé selon les revendications précédentes.
